Europäisches Patentamt

European Patent Office

Office européen des brevets

(19)

(11) Veröffentlichungsnummer: **0 302 549**
**A2**

(12) # EUROPÄISCHE PATENTANMELDUNG

(21) Anmeldenummer: 88201575.3

(22) Anmeldetag: 20.07.88

(51) Int. Cl.⁴: **G11B 33/04 , G11B 23/03**

(30) Priorität: 03.08.87 DE 3725616

(43) Veröffentlichungstag der Anmeldung:
08.02.89 Patentblatt 89/06

(84) Benannte Vertragsstaaten:
**DE FR GB IT**

(71) Anmelder: **Philips and Du Pont Optical**
**Deutschland GmbH**
**Podbielskistrasse 164**
**D-3000 Hannover 1(DE)**

(84) **DE**

(71) Anmelder: **Philips and Du Pont Optical**
**Company**
**Buizerdlaan 2**
**NL-3435 SB Nieuwegein(NL)**

(84) **FR GB IT**

(72) Erfinder: **Grobecker, Hermann**
**Scheelenkamp 6**
**D-3008 Garbsen 4(DE)**
Erfinder: **Heuer, Werner**
**Steinstrasse 51**
**D-3160 Lehrte(DE)**
Erfinder: **Pichler, Alois**
**Stettiner Strasse 6**
**D-3004 Isernhagen 1(DE)**

(74) Vertreter: **Kupfermann, Fritz-Joachim,**
**Dipl.-Ing. et al**
**Philips Patentverwaltung GmbH**
**Wendenstrasse 35 Postfach 10 51 49**
**D-2000 Hamburg 1(DE)**

(54) **Aufbewahrungskassette für einen plattenförmigen Informationsträger.**

(57) Bei einer Aufbewahrungskassette mit einem Bodenteil, einem klappbaren Deckelteil und einem in das Bodenteil einlegbaren Tablett zur Aufnahme eines einlegbaren plattenförmigen Informationsträgers, der mittels dreier an dem Tablett vorgesehenen Halterungen, von denen wenigstens eine beweglich ausgebildet ist, an seinem äußeren Rand halterbar ist, ist zur Transportsicherung vorgesehen, daß an dem Deckelteil wenigstens ein Verriegelungselement vorgesehen ist, welches in zugeklapptem Zustand des Deckels die federnd ausgebildete Halterung in ihrer Grundstellung arretiert.

Fig.1

## Aufbewahrungskassette für einen plattenförmigen Informationsträger

Die Erfindung bezieht sich auf eine Aufbewahrungskassette mit einem Bodenteil, einem klappbaren Deckelteil und einem in das Bodenteil einlegbaren Tablett zur Aufnahme eines einlegbaren plattenförmigen Informationsträgers, der mittels wenigstens dreier, an dem Tablett vorgesehenen Halterungen über seinen äußeren Rand am Tablett halterbar ist, wobei wenigstens eine Halterung beweglich ausgebildet ist und in ihrer Grundstellung den Informationsträger unter Federkraft gegen die übrigen Halterungen drückt und ihn in seiner Lage fixiert.

Derartige Aufbewahrungskassetten sind beispielsweise aus der europäischen Patentanmeldung 0 188 663 bekannt. Ein Element zur Aufnahme und Halterung einer steifen kreisförmigen Informationsplatte besteht dabei aus einem in eine Aufbewahrungskassette einzubringenden Tablett mit einer Aufnahmewanne, die Halterungen zum Fixieren der Informationsplatte aufweist. Die Halterungen wirken einander gegenüberliegend auf den Rand einer eingelegten Informationsplatte ein. Wenigstens eine dieser Halterungen ist federnd ausgebildet. Das Tablett hat eine doppelte Funktion, nämlich das Festhalten der Informationsplatte während der Aufbewahrung in der Aufbewahrungskassette, und es ermöglicht zusätzlich das berührungslose Überführen der Informationsplatte von der Kassette in die Abspieleinrichtung. Bei Bedarf kann die Platte jedoch auch dem Tablett von Hand entnommen und in das Abspielgerät eingeführt werden.

Bei derartigen Tabletts mit wenigstens einer federnd ausgebildeten Halterung kann die federnd ausgebildete Halterung bei Erschütterungen derart zurückfedern, daß der plattenförmige Informationsträger freikommt. Dieses ist unerwünscht, da der Informationsträger in diesem Falle in der Verpackung hin und her schlagen und beschädigt werden kann.

Es ist Aufgabe der Erfindung, eine Aufbewahrungskassette mit einem einlegbaren Tablett der eingangs genannten Art dahingehend zu verbessern, daß ein in das Tablett eingelegter, plattenförmiger Informationsträger auch unter Einwirkung von Erschütterungen auf das Tablett sicher in den Halterungen fixiert ist, ohne daß eine Entnahme des Informationsträgers aus dem Tablett erschwert wird.

Diese Aufgabe ist erfindungsgemäß dadurch gelöst, daß an dem Deckelteil wenigstens ein Verriegelungselement vorgesehen ist, welches in zugeklapptem Zustand des Deckels die federnd ausgebildete Halterung in ihrer Grundstellung arretiert. Mittels eines derartigen am Deckelteil vorgesehenen Verriegelungselementes wird ein Zurückfedern der beweglich und federnd ausgebildeten Halterung verhindert. Dies gilt auch bei Einwirkung mechanischer Erschütterungen. Dadurch, daß das Verriegelungselement am Deckelteil vorgesehen ist, wird beim Schließen des Deckelteils auf das Bodenteil automatisch die federnd ausgebildete Halterung in ihrer Grundstellung arretiert. Gleichwohl ist bei geöffnetem Deckelteil gewünschtenfalls eine Entnahme des plattenförmigen Informationsträgers möglich, in dem die federnd ausgebildete Halterung manuell aus ihrer Grundstellung wegbewegt wird, so daß der plattenförmige Informationsträger freigegeben wird.

Das Verriegelungselement ist vorteilhafter Weise derart angeordnet, daß es auf die federnd ausgebildete Halterung solange keine Kraft ausübt, wie diese sich in ihrer Grundstellung befindet. Damit ist sichergestellt, daß auf einen eingelegten plattenförmigen Informationsträger keine zusätzlichen Kräfte ausgeübt werden, welche zu Verwindungen desselben führen könnten.

Das Verriegelungselement ist wirtschaftlich herstellbar, da lediglich an dem Deckelteil eine entsprechende Vorrichtung vorzusehen ist, die zusammen mit dem Deckelteil gespritzt werden kann und somit nahezu keinen zusätzlichen Aufwand erfordert.

Nach einer weiteren Ausgestaltung der Erfindung ist vorgesehen, daß das Verriegelungselement an dem Deckelteil die Form einer Sperrnase aufweist, die in zugeklapptem Zustand des Deckels so hinter die bewegliche Halterung greift, daß diese nicht aus ihrer Grundstellung bewegbar ist.

Die bewegliche Halterung fixiert in ihrer Grundstellung einen eingelegten plattenförmigen Informationsträger so, daß dieser nicht entnehmbar ist. Zur Entnahme des plattenförmigen Informationsträgers ist die bewegliche Halterung aus ihrer Grundstellung gegen die Federkraft zu bewegen. Ein erfindungsgemäßes Verriegelungselement kann nun vorteilhafter Weise so an dem Deckelteil angebracht werden, daß es hinter die bewegliche Halterung greift, so daß diese nicht aus ihrer Grundstellung bewegbar ist. Dazu wird an dem Deckelteil eine Sperrnase vorgesehen, die in zugeklapptem Zustand des Deckels hinter die bewegliche Halterung greift. Es ist so auf einfache Weise sicher vermieden, daß in zugeklapptem Zustand des Deckels, also beispielsweise beim Transport, die bewegliche Halterung sich aus der Grundstellung zurückbewegen und einen eingelegten plattenförmigen Informationsträger freigeben kann. Ein weiterer Vorteil einer solchen Anordnung besteht darin, daß an dem Tablett bzw. an der an dem Tablett angebrachten beweglichen Halterung keine zusätzlichen Maßnahmen zur Transportsicherung erforderlich sind. Es genügt vielmehr, eine Sperrnase an dem Deckelteil in der oben beschriebenen Form vorzusehen.

Nach einer weiteren Ausgestaltung der Erfindung ist vorgesehen, daß an dem einlegbaren Tablett im Bereich der Drehachse des Deckelteils eine Griffleiste vorgesehen ist und daß die bewegliche Halterung am Tablett und die Sperrnase am Deckelteil im Bereich der Griffleiste angeordnet sind.

An Tabletts der eingangs beschriebenen Art zur Aufnahme plattenförmiger Informationsträger ist häufig eine Griffleiste vorgesehen. Werden nun sowohl die Griffleiste an dem Tablett, wie auch die bewegliche Halterung so angeordnet, daß sie im Bereich der Drehachse des Deckelteils angeordnet sind, so ist auch die Sperrnase im Bereich der Griffleiste angeordnet. Dabei ergibt sich der Vorteil, daß die Sperrnase in einem Bereich des Deckelteils angeordnet ist, in dem sie nicht stört. Dies ist deshalb von Bedeutung, weil in dem Deckelteil häufig eine Vorrichtung beispielsweise zur Aufnahme eines Textheftes vorgesehen ist. Ist die Sperrnase im Bereich der Drehachse des Deckelteils vorgesehen, so wird das Einlegen eines solchen Textheftes nicht behindert.

Ein Ausführungsbeispiel der Erfindung wird anhand der Zeichnungen näher erläutert. Es zeigen:

Fig. 1 eine Aufbewahrungskassette mit einem Bodenteil, einem mit einem Verriegelungselement versehen, klappbaren Deckelteil und einem in das Bodenteil eingelegten Tablett,

Fig. 2 die Aufbewahrungskassette nach Fig. 1 im Schnitt entlang der Linie II-II und eingelegtem Informationsträger,

Fig. 3 die Aufbewahrungskassette im Schnitt entsprechend der Fig. 2 in zugeklapptem Zustand des Deckelteils.

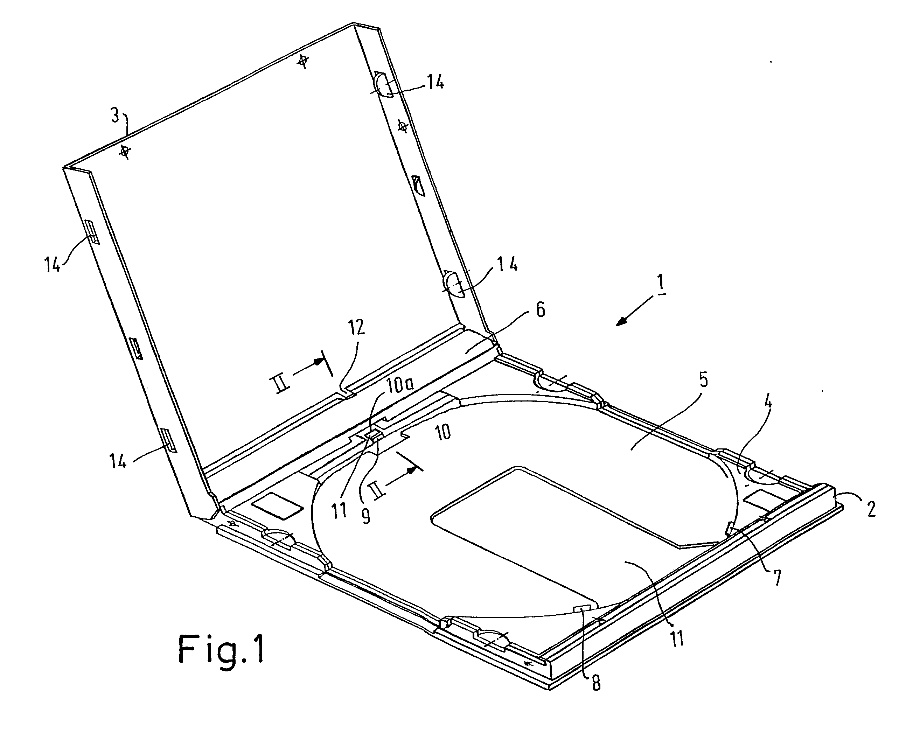

Eine in Fig. 1 dargestellte Aufbewahrungskassette dient der Aufnahme und Lagerung von plattenförmigen Informationsträgern, insbesondere optisch auslesbaren Informationsträgern, wie beispielsweise einer Compact-Disc. Die Aufbewahrungskassette 1 weist ein Bodenteil 2 und ein klappbares Deckelteil 3 auf. Sowohl das Bodenteil 2 wie auch das Deckelteil 3 bestehen meist aus einem transparenten Kunststoff. Das Deckelteil 3 ist drehbar gelagert mit dem Bodenteil 2 verbunden. In das Bodenteil 2 ist ein Tablett 4 zur Aufnahme eines plattenförmigen Informationsträgers eingelegt. Dieses Tablett 4 dient der Aufnahme eines in der Fig. nicht dargestellten Informationsträgers. Dazu weist das Tablett 4 eine kreisförmige Vertiefung 5 auf, in die der Informationsträger einlegbar ist. Auf einer Seite neben der Wanne 5 ist eine Griffleiste 6 angeordnet. Diese Griffleiste 6 befindet sich im Bereich der Drehachse des an dem Bodenteil klappbar gelagerten Deckelteils 3.

Zur Fixierung eines in der Fig. 1 nicht dargestellten in die Wanne 5 eingelegten plattenförmigen Informationsträgers sind am Rand der Wanne 5 drei Halterungen vorgesehen, welche einen eingelegten Informationsträger an dessen äußerem Rand festhalten. Zwei Halterungen 7 und 8 sind der Griffleiste 6 gegenüberliegend am äußeren Rand der Wanne 5 angeordnet. Diese Halterungen 7 und 8 sind unbeweglich ausgeführt. Die Halterungen 7 und 8 sind in einem solchen Abstand voneinander angeordnet, daß ein eingelegter Informationsträger sich möglichst wenig hin und her bewegen kann. Eine dritte Halterung 9 ist den Halterungen 7 und 8 gegenüberliegend, d.h. also im Bereich der Griffleiste 6 am Rande der Wanne 5 angeordnet. Im Gegensatz zu den Halterungen 7 und 8 ist die Halterung 9 beweglich ausgeführt. Dazu ist die Halterung 9 auf einer Blattfeder 10 vorgesehen. In der Ruhestellung der Blattfeder 10 und der Halterung 9 ist eine in der Fig. nicht dargestellte Informationsplatte zwischen den Halterungen 7, 8 und 9 eingeklemmt. Die Halterung 9 kann mittels Zurückfedern der Blattfeder 10 aus ihrer Grundstellung zurückbewegt werden, so daß ein zwischen den Halterungen 7, 8 und 9 eingeklemmter Informationsträger aus der Wanne 5 entnommen werden kann. Eine derartige Entnahme kann entweder per Hand geschehen, indem die Blattfeder 10 und die Halterung 9 manuell zurückbewegt werden, oder aber auch automatisch in einem Gerät. In diesem Falle wird das gesamte Tablett 4 mitsamt einem eingelegten und zwischen den Halterungen 7, 8 und 9 fixierten Informationsträger in ein Abspielgerät eingeschoben. In dem Abspielgerät wird dann durch eine entsprechend vorzusehende Vorrichtung die Blattfeder 10 und damit auch die Halterung 9 zurückbewegt, so daß der eingelegte plattenförmige Informationsträger freigegeben wird und abspielbar ist. Zu diesem Zwecke ist in der Wanne 5 eine Aussparung 11 vorgesehen, welche es gestattet, eine in die Wanne 5 eingelegten plattenförmigen Informationsträger von unten her, beispielsweise mittels eines Laserstrahls, abzutasten.

Bei derartigen Aufbewahrungskassetten und in diese einlegbaren Tabletts besteht nun das Problem, daß ein Zurückfedern der Blattfeder 10 mitsamt der an ihr vorgesehenen Halterung 9 auch unerwünschter Weise beim Transport möglich ist. Ein beim Transport in die Wanne 5 eingelegter und zwischen den Halterungen 7, 8 und 9 fixierter Informationsträger übt bei auf das Tablett ausgeübten Erschütterungen entsprechende Kräfte auf die Halterung 9 und damit auch auf die Blattfeder 10 aus, so daß diese gegebenenfalls sich nach außen aus ihrer Grundstellung heraus wegbewegen können. In diesem Falle kann ein eingelegter plattenförmiger Informationsträger aus wenigstens einer der Halterungen 7, 8 oder 9 herausbewegt werden, so daß er (bei zugeklapptem Deckelteil 3) in der Aufbewahrungskassette lose hin und her schlägt. Dies ist zu vermeiden, da gerade bei optisch auslesbaren Informationsträgern ein Zerkratzen oder ähnliches deren Oberflächen unbedingt vermieden werden muß. Außerdem besteht in diesem Falle die Gefahr der Verwindung des Informationsträgers.

Zur Vermeidung dieses Problems ist erfindungsgemäß an dem Deckelteil 3 im Bereich dessen Drehachse an dem Bodenteil 2 eine Sperrnase 12 vorgesehen. Diese Sperrnase 12 steht etwa senkrecht aus dem Deckelteil 3 heraus und ist an diesem so angeordnet, daß sie in zugeklapptem Zustand des Deckels 3 hinter die Halterung 9 auf der Blattfeder 9 greift. Zu diesem Zwecke ist hinter der Halterung 10 in der Blattfeder 10 eine Aussparung 11 vorgesehen, in die die Sperrnase 12 eingreifen kann. Die Sperrnase 12 ist also so angeordnet, daß sie in diese Aussparung 12 eingreifen, wenn in die Wanne 5 ein plattenförmiger Informationsträger zwischen den Halterungen 7, 8 und 9 eingeklemmt ist. Die Halterung 9 ist dann in dieser Grundstellung arretiert und verbleibt bei auf sie einwirkenden Kräften in dieser Stellung.

Die Sperrnase 12 behindert, da sie am Deckelteil vorgesehen ist, den normalen Betrieb des Tabletts in keiner Weise, d.h. ein eingelegter Informationsträger kann nach wie vor sowohl manuell, wie auch mechanisch in einem entsprechenden Abspielgerät aus der Wanne 5 des Tabletts 4 entnommen werden.

Da die Sperrnase 12 im Bereich der Drehachse des Deckelteils vorgesehen ist, wird ein Einlegen eines in der Fig. nicht dargestellten Textheftes in das Deckelteil 3 nicht behindert. Zu diesem Zwecke sind an den Seitenwänden des Deckelteils 3 Aufnahmen 14 vorgesehen, hinter die ein Textheft schiebbar ist.

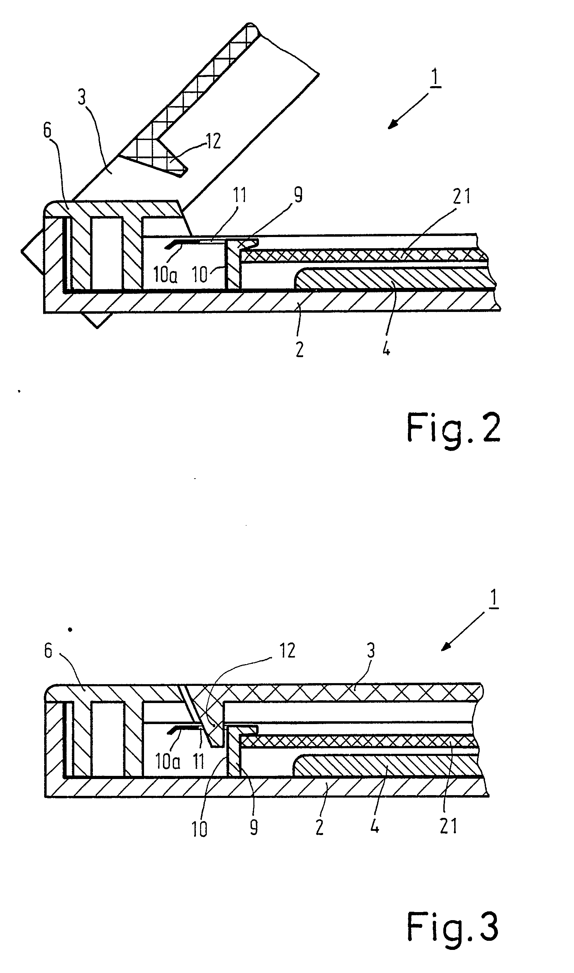

In Fig. 2 ist ein Ausschnitt der in Fig. 1 dargestellten Aufbewahrungskassette mitsamt dem eingelegten Tablett 4 im Schnitt entlang der Linie II-II dargestellt. In der Fig. 2 ist das Bodenteil 2 mit dem aufgeklappten Deckelteil 3 mit einem in das Bodenteil 2 eingelegten Tablett 4 dargestellt. In das Tablett 4 ist ein plattenförmiger Informationsträger 21 eingelegt. Der plattenförmige Informationsträger 21 ist hinter der beweglichen Halterung 9 fixiert. Die Halterung 9 ist an der Blattfeder 10 vorgesehen, die eine in Richtung der Griffleiste 6 weisende Zunge 10a aufweist. In dieser Zunge 10a der Blattfeder 10 ist eine Aussparung 11 vorgessehen.

In Fig. 2 ist die Halterung 9 in ihrer Grundstellung dargestellt. In dieser Grundstellung ist ein plattenförmiger Informationsträger 21 hinter der Halterung 9 eingeklemmt. Auf der anderen Seite des Informationsträgers ist dieser in der Fig. 2 nicht dargestellter Weise zwischen den Halterungen 7 und 8 des Tabletts 4 eingeklemmt (siehe Fig. 1).

Für einen Transport soll nun die Halterung 9 mitsamt der Blattfeder 10 in dieser Grundstellung fixiert werden. Dies geschieht mittels der an dem Deckelteil 3 vorgesehenen Sperrnase 12, welche in die Aussparung 11 in der Nase 10a der Blattfeder 10 eingreift.

In Fig. 3 ist die Aufbewahrungskassette 1 nach Fig. 2 in zugeklapptem Zustand des Deckels 5 dargestellt. Die an dem Deckelteil 3 vorgesehene Sperrnase 12 greift in die Aussparung 11 der Zunge 10a der Blattfeder 10 ein. Auf diese Weise ist die bewegliche Halterung 9 in ihrer Grundstellung fixiert. Die Sperrnase 12 greift mit etwas Spiel in die Aussparung 11 ein, so daß auf die Blattfeder 10 und damit auf die bewegliche Halterung 9 keine Kraft ausgeübt wird, die zu einem Verwinden des eingelegten plattenförmigen Informationsträgers 21 führen könnte.

In dem in Fig. 3 dargestellten Zustand, der auch beim Transport gegeben ist, ist der plattenförmige Informationsträger 21 in der Aufbewahrungskassette 1 in der Weise gelagert, daß er auch bei auf die Aufbewahrungskassette einwirkenden Erschütterungen sicher hinter den Halterungen 7, 8 und 9 fixiert ist und somit nicht die Gefahr besteht, daß der Informationsträger beschädigt wird oder sich verwindet.

## Ansprüche

1. Aufbewahrungskassette mit einem Bodenteil (2), einem klappbaren Deckelteil (3) und einem in das Bodenteil einlegbaren Tablett (4) zur Aufnahme eines einlegbaren plattenförmigen Informationsträgers, der mittels wenigstens dreier, an dem Tablett vorgesehenen Halterungen (7, 8, 9) über seinen äußeren Rand am Tablett haltbar ist, wobei wenigstens eine Halterung (9) beweglich ausgebildet ist und in ihrer Grundstellung den Informationsträger unter Federkraft gegen die übrigen Halterungen drückt und ihn in seiner Lage fixiert, dadurch gekennzeichnet, daß an dem Deckelteil (3) wenigstens ein Verriegelungselement (12) vorgesehen ist, welches in zugeklapptem Zustand des Deckels (3) die federnd ausgebildete Halterung(8) in ihrer Grundstellung arretiert.

2. Aufbewahrungskassette nach Anspruch 1, dadurch gekennzeichnet, daß das Verriegelungselement (12) an dem Deckelteil (3) die Form einer Sperrnase aufweist, die bei zugeklapptem Deckel (3) in der Weise hinter die bewegliche Halterung (9) greift, daß diese nicht aus ihrer Grundstellung bewegbar ist.

3. Aufbewahrungskassette nach Anspruch 2, dadurch gekennzeichnet, daß an dem einlegbaren Tablett (14) im Bereich der Drehachse des Deckelteils (3) eine Griffleiste (6) vorgesehen ist und daß die bewegliche Halterung (9) am Tablett (14) und die Sperrnase (12) am Deckelteil (3) im Bereich der Griffleiste angeordnet sind.

Fig.1

Fig.2

Fig.3